# EUROPEAN PATENT SPECIFICATION

(11) **EP 1 063 158 B1**
(45) Date of publication and mention of the grant of the patent: **11.03.2009**
(21) Application number: 00113517.7
(22) Date of filing: 26.06.2000
(51) Int. Cl.: B62J 17/04

(54) **Vehicle**
Fahrzeug
Véhicule

(30) Priority: 25.06.1999 JP 17953199
(43) Date of publication of application: 27.12.2000
(73) Proprietor: Yamaha Hatsudoki Kabushiki Kaisha, Iwata-shi, Shizuoka-ken (JP)
(72) Inventor: Yamamoto, Yoshiaki, Iwata-Shi, Shizuoka-ken (JP)
(74) Representative: Grünecker, Kinkeldey, Stockmair & Schwanhäusser Anwaltssozietät

(56) References cited:
- AU-A- 8 412 282
- JP-A- 60 047 777
- PATENT ABSTRACTS OF JAPAN vol. 1998, no. 13, 30 November 1998 (1998-11-30) & JP 10 203453 A (HONDA MOTOR CO LTD), 4 August 1998 (1998-08-04)

## Description

This invention relates to a vehicle according to the preamble portion of claim 1, having a screen disposed at the front section to introduce and guide a running wind toward the back side of the screen.

There has been known such a kind of scooter type vehicle, in which in front of the seat for a driver, a screen for shielding a wind is disposed.

In particular, from JP 60-047777 there is known a front windshield with an inlet provided at a lower section of the windshield for introducing air to a backside of the windshield to reduce turbulence of driving wind for the driver. Therein, a wind guiding portion connected to the air inlet portion is attached to a back side of the windshield. Further, there is provided a rotatable visor for blocking the inlet if required and for redirecting the running wind passing through the inlet.

Further, AU 84 122/82 discloses a front windshield with an inlet opening in a lower portion of the windshield, wherein a channel is formed on the backside of the windshield to guide the air along the backside of the windshield.

Further, JP 10-203453 discloses another front windshield with an inner portion at a lower end thereof and with a channel portion formed on a backside of the front windshield.

However, in such a conventional screen, with the screen increased in size, the ability to shield a wind is improved, but undesirable resistance to running will be increased. Therefore, it is not able to make the screen so large in size to completely shield the head and driver, causing turbulence around the head to be generated and then strong wind whistle to be produced. To prevent such turbulence, a running wind may be introduced through a duct toward the upper portion of the backside of the screen. However, it causes a complicated structure, limited structure for mounting the screen, long passage of the wind guide and increased resistance of passage line.

In view of the foregoing, it is the objective of this invention to provide a vehicle as indicated above capable of ensuring that the wind whistle is reduced, the structure is simplified, the structure for mounting the screen is not limited, the wind guide is short in length, and the resistance of passage line is reduced.

This objective is solved in an inventive manner by a vehicle having the features of claim 1.

Preferred embodiments are laid down in the dependent claims.

In the following, the present invention is explained in greater detail in conjunction with the accompanying drawings, wherein:
Fig.1 is a general side view of a scooter type vehicle according to an embodiment
Fig.2 is a side view of the scooter type vehicle according to the embodiment
Fig.3 is a sectional view taken along line C-C of Fig.1;
Fig.4 is a side view of a body frame of the scooter type vehicle according to the embodiment
Fig.5 is a plan view of the body frame of the scooter type vehicle according to the embodiment
Fig.6 is a rear view of the body frame of the scooter type vehicle according to the embodiment
Fig.7 is a right side view of the forward portion of the body frame of the scooter type vehicle according to the embodiment
Fig.8 is a longitudinal sectional view of a screen or the like at the front of the vehicle according to the embodiment
Figs.9 are views showing the screen according to the embodiment : (a) is a front view and (b) is a sectional view taken along line A-A of (a);
Fig.10 is a sectional view showing a variation of Fig.8;
Fig.11 is a side view showing a radiator, a fuel tank, a frame and an under cover or the like according to the embodiment
Fig.12 is a side view showing piping of cooling water hoses or the like according to the embodiment
Fig.13 is a sectional view taken along line B-B of Fig.12;
Fig.14 is a sectional view showing a variation of Fig.13;
Fig.15 is a side view showing a container box and seats or the like according to the embodiment
Fig.16 is an exploded perspective view of the main seat and the container box according to the embodiment
Fig.17 is an exploded perspective view of the container box, main seat and rear seat according to the embodiment
Fig.18 is a side view of the container box and the frame according to the embodiment
Fig.19 is a schematic plan view showing wiring of a seat locking wire or the like according to the embodiment
Fig.20 is a schematic side view showing the wiring of the seat locking wire or the like according to the embodiment
Fig.21 is a sectional view of a junction of the seat locking wire or the like according to the embodiment
Fig.22 is a sectional view of another example of a junction of the seat locking wire or the like according to the embodiment
Fig.23 is an exploded perspective view of the rear seat, an assist grip and the container box or the like according to the embodiment
Fig.24 is a lateral sectional view of the mounting portion of the rear seat and the assist grip or the like according to the embodiment
Fig.25 is a longitudinal sectional view of the mounting portion of the rear seat and the assist grip according to the embodiment
Fig.26 is a sectional view of a mounting structure of a tail light according to the embodiment
Fig.27 is a sectional view showing a variation of the mounting structure of the assist grip and the body frame according to the embodiment
Figs.28 are perspective views showing variations of the assist grip according to the embodiment
Fig.29 is a side view showing an arrangement of a rear seat carrier and a rear carrier or the like according to the embodiment
Fig.30 is a plan view showing the arrangement of the rear seat carrier and the rear carrier or the like according to the embodiment and
Fig.31 is a perspective view of a footboard according to the embodiment

### Explanation of Symbols

33: Screen
33a: Lower portion
33b: Inlet
33c: Wind guide portion

Now an embodiment will be described in detail below.

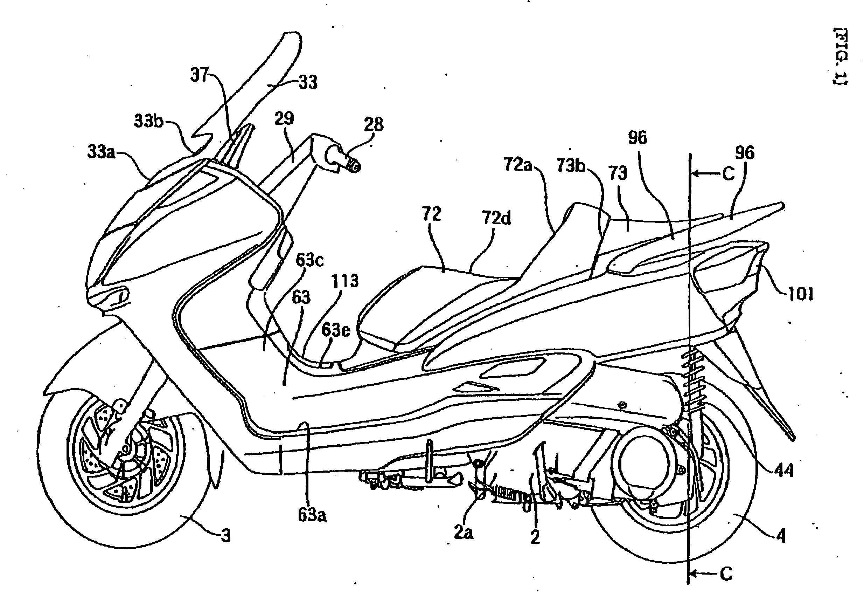

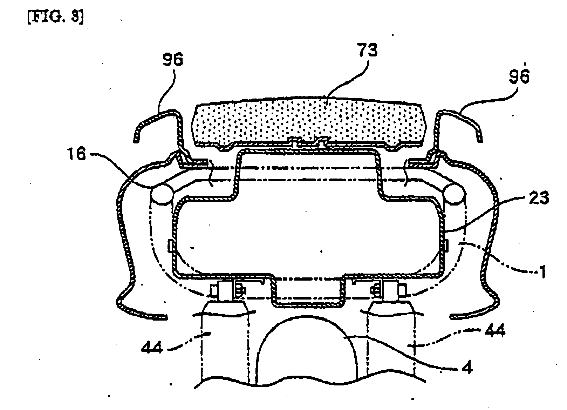

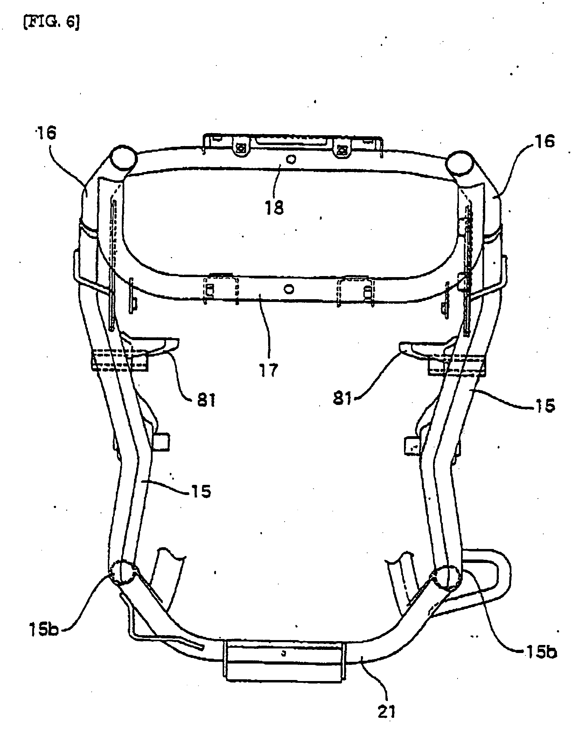

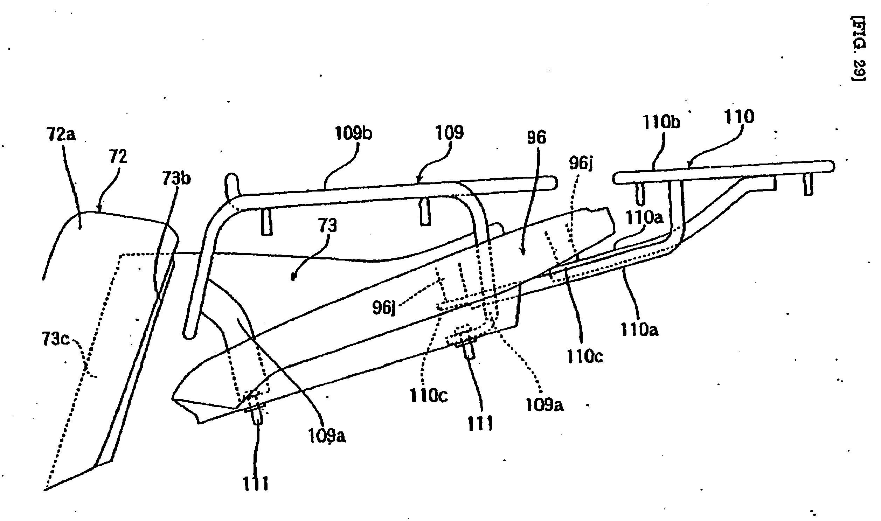

In Fig. 1 through Fig. 31 are shown an embodiment in which it is described a scooter type vehicle as a whole, including inventive portions.

The scooter type vehicle of this embodiment generally comprises a body frame 1 (hereinafter referred to as a "frame 1") having a unit swinging engine 2 connected thereto for vertical swinging movement, a front wheel 3 disposed in front of the frame 1, and a rear wheel 4 supported to the rear of the unit swinging engine 2, the frame 1 etc being covered by a plurality of covers.

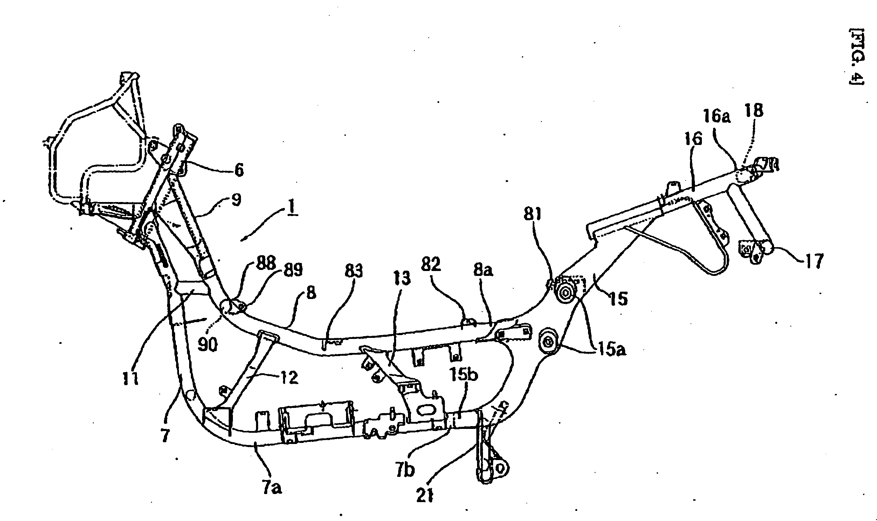

The frame 1 as a framework, as shown in Figs.4 through 6, is provided at the front with a head pipe 6; from the head pipe 6 extends obliquely downwardly a pair of right and left down tubes 7; and above the down tubes 7 are connected a pair of tank rails 8 to the head pipe 6 through a head pipe gusset 9.

These down tubes 7 and tank rails 8 are joined together by connecting pipes 11, first members 12, and second members 13 in this order from the front, on either of the right and left sides. The down tubes 7 and the tank rails 8 extend toward the rear approximately horizontally and are connected at the respective rear ends 7a, 8a to seat pipes 16 through brackets 15.

The pair of right and left seat pipes 16 are joined together at the rear ends 16a by a cross pipe 17 and a cross tube 18.

The engine bracket 15, of a hollow shell-like shape, has a mount section 15a for mounting a suspension bracket 42 of the unit swinging engine 2; the lower end 15b of the bracket 15 extended from the mount section 15a is connected to the rear end 7a of the down tube; and to the lower ends 15b are connected the opposite ends of a cross member 21 for coupling the right and left engine brackets 15.

On the inner bottom of a container box 23 (described later in detail) is provided a plate-like cross member 24; the opposite ends 24a of the plate-like cross member 24 are bolted to first support brackets 81 of a pair of right and left engine brackets 15; and thus the container box 23 is fastened indirectly to the bracket.

In this way, compared to a tubular cross member passing under the container box 23, because of the container box 23 being fastened indirectly to the bracket by the plate-like cross member 24 and absence of necessity for providing a clearance between the cross member and the bottom of the container box as in the prior art, the capacity of the container box 23 can be increased.

Also, if the container box 23 is made by aluminum die-casting, with adequate rigidity, the plate-like cross member 24 may be eliminated or formed within the container box 23 by insert molding.

On the other hand, on the head pipe 6 formed at the forward end of the frame 1 is supported for turning movement a handle 28, which is covered by a handle cover 29. Within the handle cover 29 are enclosed a brake wire 31 for a rear wheel disc brake, and various kinds of harness.

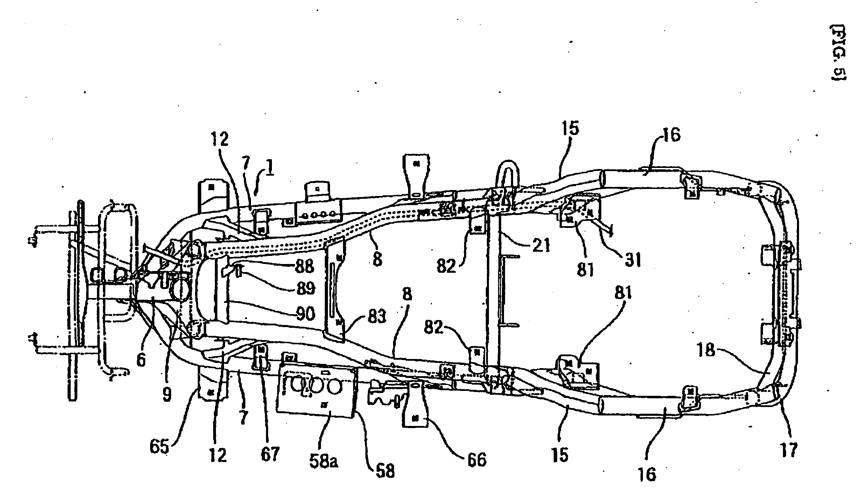

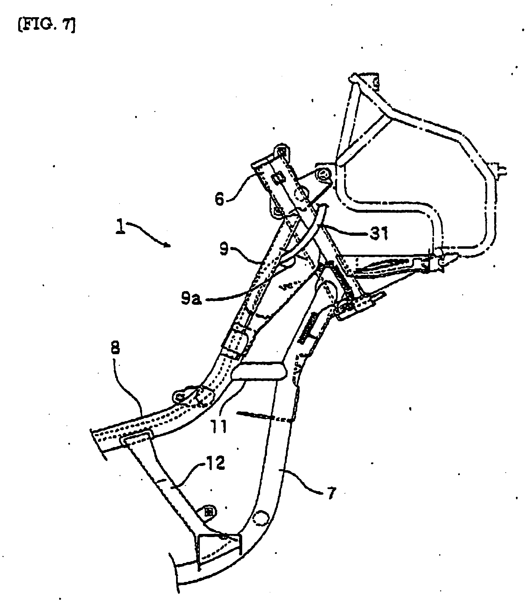

The brake wire 31, as shown in Fig.5 and Fig.7, is led downwardly along the head pipe 6 and then rearwardly into the tank rail 8 through a guide hole 9a formed in one side of the head pipe gusset 9. A seat locking wire etc may naturally be provided.

In this way, the region at the front of the frame 1, whose space is severely limited, can be arranged neatly and the brake wire 31, which passes through the tank rail 8, is led to the rear without special clamps, so that the number of parts can be reduced, effecting improved space efficiency and assembling workability. In addition, the guide hole 9a, which is provided in the press formed sheet metal head pipe gusset 9, can be reinforced around its periphery by drawing, so that the wire can be led into the pipe gusset 9 in the vicinity of the head pipe 6 where allowance for structural strength is small.

The head pipe gusset 9 may be disposed between the down tubes 7 and the head pipe 6 and formed with a guide hole 9a, through which the brake wire 31 is led into the down tube 7.

In front of the vehicle body is disposed, as shown in Fig.1, Fig.8 and Fig.9, a windshield screen 33, the lower section 33a of which is fixed to a stay 34 with bolts 35. The lower section 33a of the screen 33 is formed with an inlet 33b, of an approximate width H of a helmet, for introducing a running wind, and also with a wind guide plate portion 33c for guiding the running wind, introduced from the inlet 33b, upwardly toward the rear, that is, toward the driver's head (helmet 36). The wind guide plate portion 33c forms a continuous plane with the upper surface 37a of a meter visor 37. The upper surface 37a of a meter visor 37 is formed with a drain hole 37b and with a ridge 37c behind the drain hole 37b, and the ridge 37c causes the rainwater blown up along the wind guide plate portion 33c to be blocked and to be discharged from the drain hole 37b.

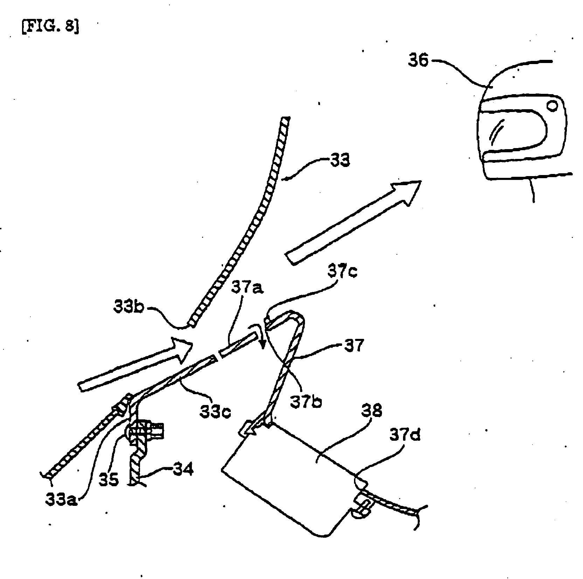

Also, the meter visor 37 is formed, in its vertical wall, with an opening 37d, in which is fitted a speed meter 35 (see Fig.8).

In this way, the inlet 33b formed in the lower section 33a of the screen 33 guides the running wind toward the driver's helmet 36, which causes air flow near the helmet 36 to be altered, effecting reduction in intensity of wind whistles. In addition, part of the running wind flows smoothly through the inlet 33b and thus running resistance of the screen 33 is decreased, so that the screen 33 can be increased in size, improving its wind protection effects.

Further, as a result of a simple structure of the inlet 33b formed in the lower section 33a of the screen 33, design of the mounting structure of the screen 33 is not limited, and air can be introduced effectively due to its decreased wind path.

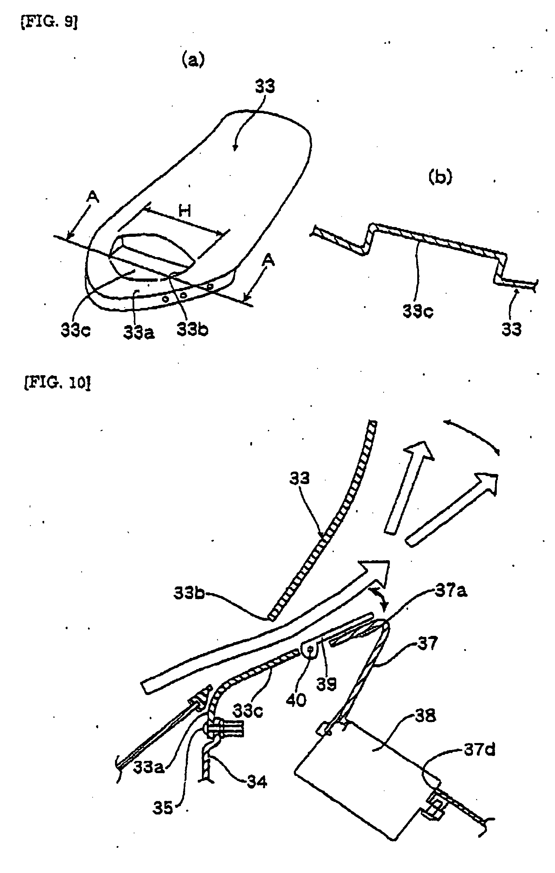

Moreover, the inlet 33b is formed in the screen 33 and configured as shown in Fig.9(b), thereby providing weight saving and cost reduction due to the improved area coefficient of the screen 33.

Yet further, the meter visor 37 is formed with a drain hole 37b, and also with a ridge 37c behind the drain hole 37b, so that rainwater can be discharged smoothly from the drain hole 37b, thereby preventing rainwater from splashing toward the driver.

In addition, as shown in Fig.10, the wind guide plate portion 33c of the screen 33 may be provided, at the rear end, with a variable angle visor 39. The variable angle visor 39 is fitted to the wind guide plate portion for rotation about a shaft 40 and arranged by an unillustrated mechanism such that its angle can be adjusted so as to variably fix the direction of the running wind introduced from the inlet 33b.

Therefore, the flow of the running wind introduced from the inlet 33b of the screen 33 can be adjusted by the variable angle visor 39 to suit the driver's physique, effecting reduction in size and weight, as well as in intensity of wind whistles at reduced costs.

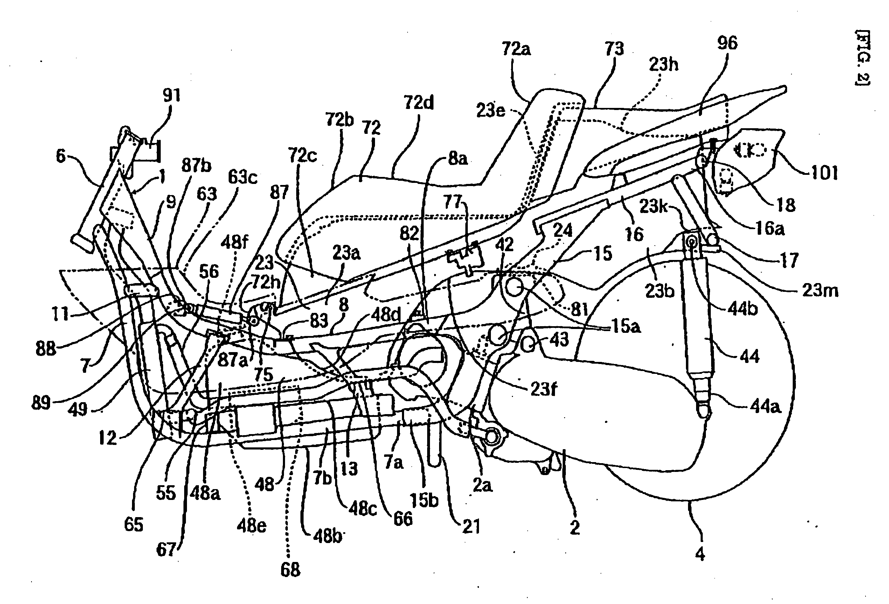

On the other hand, as shown in Fig.2, the unit swinging engine 2 is connected to the engine brackets 15 through the suspension brackets 42. Specifically, the suspension bracket 42 is mounted to the engine bracket 15 at two mount sections 15a and connected to the unit swinging engine 2 through a pivot shaft 43. At the rear end of the unit swinging engine 2 is connected, for pivotal movement, the lower end 44a of a rear cushion 44, the upper end 44b of which is supported for pivotal movement on the bracket 45 fixed to the frame 1.

In the unit swinging engine 2, as shown in Fig.1 etc, a cylinder in a cylinder block 2a is disposed on the forward side of the engine, with the cylinder axis approximately horizontal in the longitudinal direction.

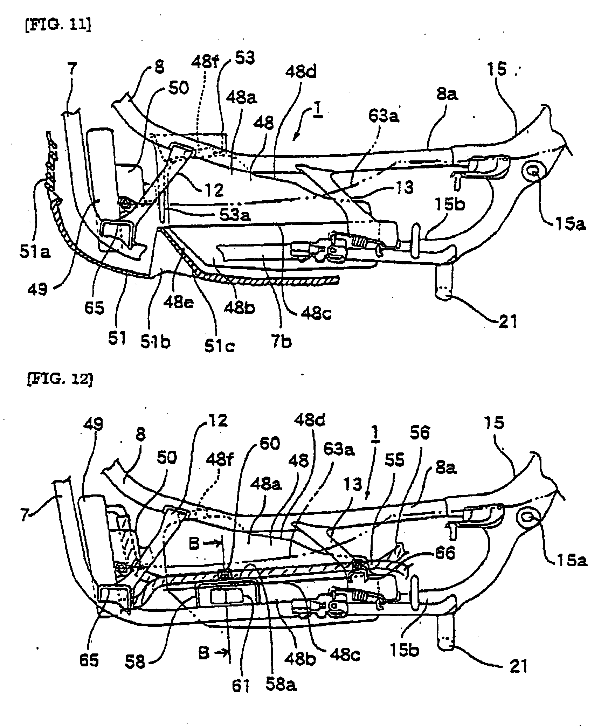

As shown in Fig.12, in front of the unit swinging engine 2 is disposed a fuel tank 48 on the frame 1, in front of which is disposed a radiator 49 also on the frame 1.

The fuel tank 48 has an upper member 48a and a lower member 48b jointed by a welding flange 48c; the top surface 48d of the upper member 48a is downwardly inclined toward the rear; and the "lower forward end of the fuel tank 48," or the front of the lower member 48b forms a slant surface 48e.

The radiator 49 is provided with right and left tank sections 49a, 49b laterally of the vehicle; between the tank sections 49a is formed a fin section 49c; and behind the radiator 49 is disposed a radiator fan 50.

An under cover 51 is disposed extending from the front of the radiator 49 to the underside of the fuel tank 48, and the under cover 51 is formed, at its forward rising portion, with a louver 51a for introducing a running wind to the radiator 49 and at its bottom, with an exhaust port 51b for exhausting downwardly hot air passed through the radiator 49.

In addition, in order to cover the slant surface 48e of the lower forward end of the fuel tank 48, a heat insulating plate 51c is formed integral with the under cover 51. The heat insulating plate 51c acts as a wind guide plate for introducing a wind to the discharge port 51b.

The fuel tank 48 is provided with a filler hole 48f, around which is disposed a filler cover 53. The upper forward end of the fuel tank 48 above the slant surface 48e, or the front of the upper member 48a of the fuel tank, is covered by a heat insulating section 53a extending downwardly from the filler cover 53 of the fuel tank 48.

In the embodiment described above, a hot wind passing, from the front of the vehicle, through the louver 51a of the under cover 51 and exchanged of its heat through the radiator 49, is sent toward the fuel tank 48 behind the radiator 49. However, the front of the fuel tank 48 is covered by the heat insulating section 53a of the filler cover 53 and the heat insulating plate 53c of the under cover 51, therefore the hot wind does not blow directly against the fuel tank 48 and it is guided by the insulating plate 51c to be discharged downwardly from the discharge port 51b, preventing temperature rise of the fuel tank 48.

Also, such a heat insulating plate 51c or a heat insulating section 53a is formed on the existing under cover 51 or the filler cover 53, so that no special heat insulating member is necessary, preventing an increase in the number of parts and installation workhours.

Also, from the bottom of the left tank section 49b of the radiator 49 extends rearwardly a cooling water supply pipe 55, and from the top of the right tank section 49a extends rearwardly a cooling water return pipe 56. Both of these cooling water pipes 55, 56 are made of rubber, running on the left side of the vehicle, and the cooling water supply pipe 55 is connected to a water pump of the unit swinging engine 2, while the cooling water return pipe 56 is connected to a cooling water discharge port of the same.

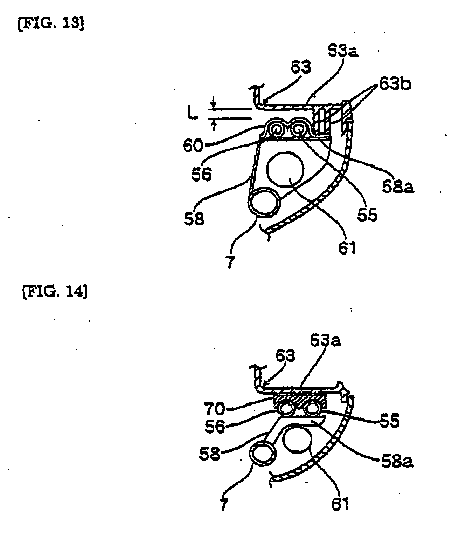

In the course of installing the cooling water pipes 55, 56, as shown in Fig.12 and Fig.13, an outwardly opened box-shaped support stay 58 is fixed to the horizontal portion 7b of the down tube 7 and to the support stay 58 on the horizontal side 58a are fastened, with fixing band 60, two cooling water pipes 55, 56, which extend in the longitudinal direction of the vehicle. Within the support stay 58 is disposed a fuel pump 61.

Also, on the support stays 58 are supported a pair of right and left foot rests 63a of a footboard 63 as a body cover. Specifically, the foot rest 63a is provided with a downwardly extending load receiving member 63b, the lower end of which is in abutment with the horizontal side 58a of the support stay 58 in the vicinity of the cooling water pipes 55, 56, whereby the foot board 63 is supported by the support stay 58. Also, in front of or behind the support stay 58 are disposed load receiving members 65, 66, 67 fixed to the frame 1, and the foot board 63 is also supported by these load receiving members 65, 66, 67. On the load receiving member 66 are laid the cooling pipes 55, 56 as in the case of the support stay 58.

On the other hand, on the right side of the vehicle is disposed a battery 68, and also laid electric wiring leading out from the battery etc.

As described above, as a result of the cooling water pipes 55, 56 being laid for fastening on the horizontal side 58a of the support stay 58, an effective space for electrical equipment or a fuel pump 51 is produced under the cooling water pipes 55, 56. In addition, the load receiving member 63b is brought into contact with the stay 58, so that load on the foot rest 63a can be received in the vicinity of the cooling water pipes 55, 56, and thus the clearance L between the cooling water pipes 55, 56 and the foot board 63 can be smaller, effecting further reduction in vehicle body size. Also, no load is exerted on the cooling water pipes 55, 56, so that the wall thickness of the cooling water pipes 55, 56 can be thinner, providing weight saving and cost reduction.

In addition, it is not necessary for the cooling water pipes 55, 56 to take a roundabout path under the down tube 7, so that the cooling water pipes 55, 56 can be shorter. Further, they can be extended to the rear along the foot rest 63a of the foot board, therefore they can be laid linearly, providing a smaller flow resistance.

Furthermore, the fuel pump 61 is placed at the side of the fuel tank 48, resulting in a shorter fuel hose, and electrical and fuel lines are laid on the respective sides of the vehicle, assuring more safety.

Although, in the embodiment described above, the cooling water pipes 55, 56 are made of rubber, they may be made of metal as shown in Fig.14. The foot rest 63a of the foot board 63 is placed on the cooling water pipes 55, 56, with a rubber damper 70 therebetween.

The foot rest 63a is thus supported on the rigid cooling water pipes 55, 56, so that the support stay 58 can be smaller in size, therefore the foot board 63 can be supported in a smaller space.

Moreover, the rigid cooling water pipes 55, 56 are laid along the bottom surface of the foot rest 63a of the foot board and thus extend over the approximately entire areas necessary for supporting the foot rest 63a, so that the rigidity for the foot board 63 can be enhanced.

The structure of the footboard 63 will be described in detail later.

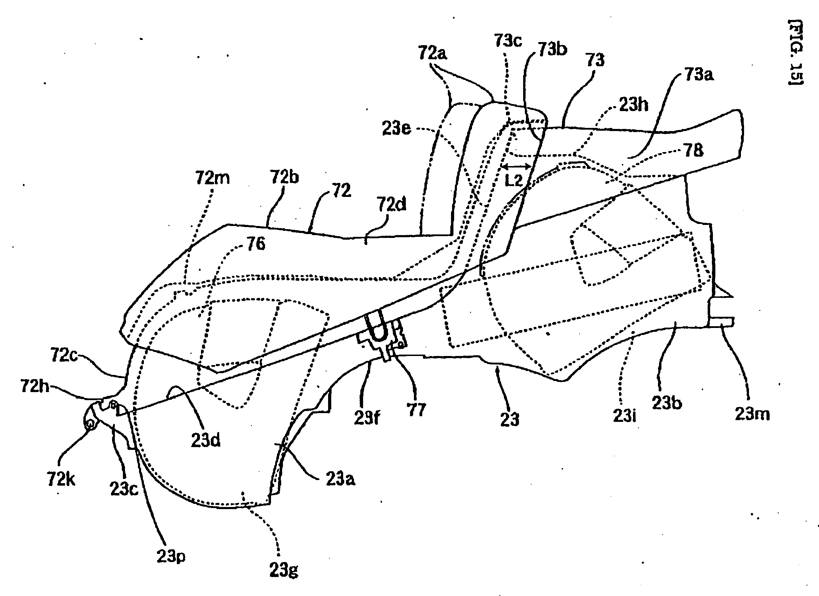

On the other hand, above the fuel tank 48 is disposed, as shown in Fig.2 and Fig.15, a large container box 23, over which are disposed a main seat 72 and a rear seat 73.

Specifically, the fuel tank 48 and the container box 23 are overlapped vertically to each other, and the container box 23 is arranged as follows:

The container box 23 comprises a main seat side container 23a located under the main seat 72, and a rear seat side container 23b located under the rear seat 73.

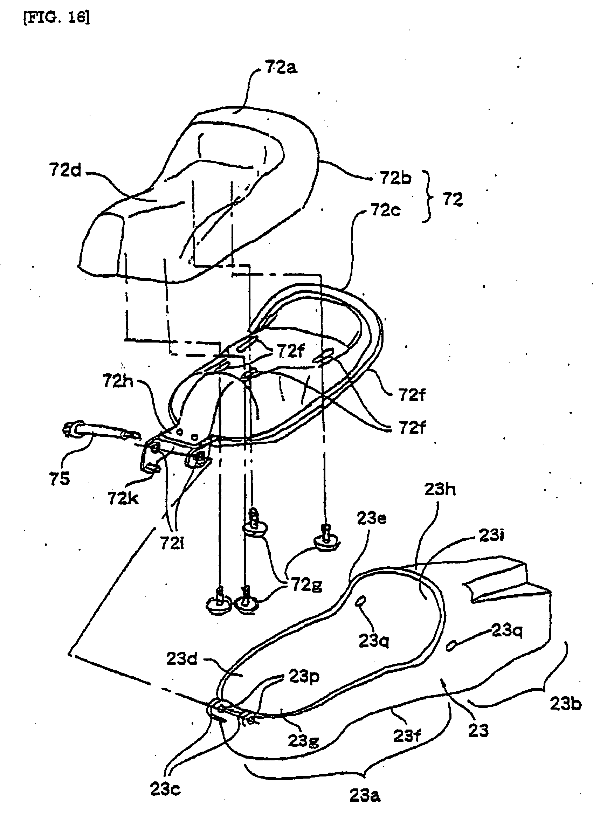

The main seat side container 23a, as shown in Fig.16, is formed at the forward end with a main seat supports 23c, to which is connected for pivotal movement, the forward end of the main seat 72 through a hinge pin 75. Also, the main seat side container 23a is formed with a opening 23d which is opened and closed by the main seat 72, and it is configured such that it rises to match the shape of a back rest 72a of the main seat 72, the rising section 23e of the opening 23d being opened and closed by the back rest 72a.

The container box 23 is formed with a narrowed portion 23f in the longitudinal middle of the bottom surface, that is, in the boundary section between the main seat side container 23a and the rear seat side container 23b, and the narrowed portion 23f constitutes a recess to the unit swinging engine 2. In front of the narrowed portion 23f is formed a forward container space 23g capable of accommodating a full face type helmet 76.

On both sides of this narrowed portion 23f are disposed locking devices 77 for the main seat 72.

The rear seat side container 23b, as shown in Fig.15, has a cave-like shape convenient for articles to be put in and taken out through the opening 23d, and its transverse cross section at 23h has the shape of approximately a letter U in correspondence with the cross section of the rear seat 73.

To the rear of the narrowed portion 23f, as shown in Fig.15, is formed a rear container space 23i capable of accommodating a full face type helmet 78. The forward container space 23g is connected to the rear container space 23i through the narrowed portion 23f, so that long articles spanning the entire length of the container box 23 can naturally be held therein

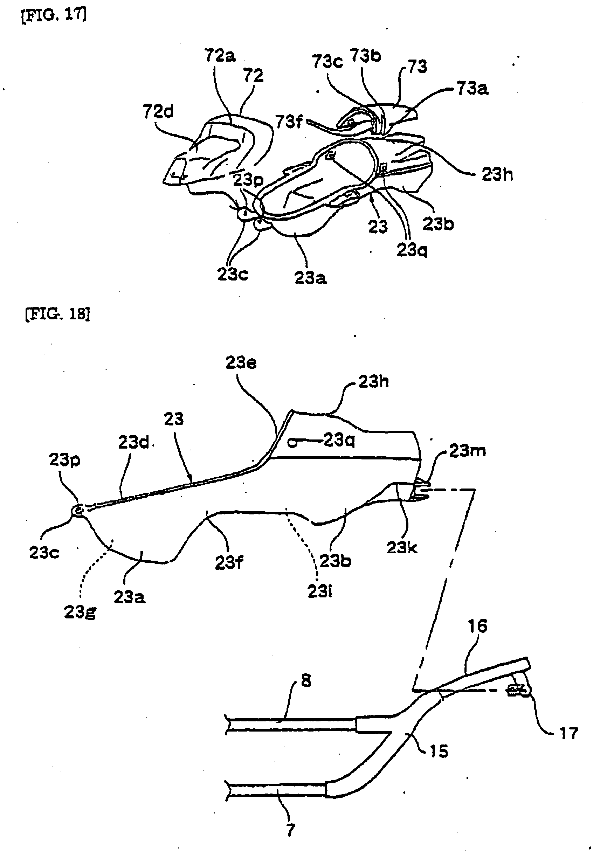

Such a container box 23, as shown in Fig.15 etc, is supported on a first, second and third support brackets 81, 82, 83 fixed to the frame 1, and as shown in Fig.18 etc, it is formed at the rear end with load receiving sections 23m, on the right and left sides, in the vicinity of which are formed fitting sections 23m projecting rearwardly. The load receiving sections k are supported on container box supports 85 projecting from the cross pipe 17 of the frame 1, and the cross pipe 17 is fitted in the fitting sections 23m of the container box 23.

In such a container box 23, the forward container space 23g is connected to the rear container space 23i through the narrowed portion 23f, so that interference of the container box 23 with the unit swinging engine 2 is avoided, long articles can be held and relatively large spaces 23g and 23i can be formed in front of and behind the narrowed portion 23f, providing a larger container space as a whole.

In addition, the main seat and the back seat 72a are formed in one body and the opening 23d of the container box 23 is configured such that it rises to match the shape of the back rest 72a of the main seat 72, so that articles can be put into and taken out from the inner rear seat side container 23b easily.

Further, the fuel tank 48 is thus disposed under the main seat side container 23a of the container box 23, so that a large free space can be produced in front of the main seat 72, providing easy boarding without interference.

The main seat side container 23a of the container box 23 and the fuel tank 48 are overlapped vertically to each other, so that movement of the center of gravity of the vehicle in the longitudinal direction is small. That is, since both of the main seat side container 23a and the fuel tank 48 can change their weight, if they are spaced a distance from each other longitudinally, movement of the center of gravity of the vehicle in the longitudinal direction becomes great at the time when their weights are changed. By contrast, in the case of the main seat side container 23a and the fuel tank 48 being overlapped vertically, even if each of their weights may vary and the total weight may be changed, movement of the center of gravity of the vehicle in the longitudinal direction is small even when the main seat side container 23a and the fuel tank 48 are disposed away from each other longitudinally.

Further, the container box 23 is formed at the rear end with the load receiving sections 23k and fitting sections, and the cross pipe 17 is fitted into this fittings, so that the number of the screw-fastening sections of the container box 23 can be reduced, improving assembling efficiency, and the corresponding screws and related container box mounting brackets on the frame can be dispensed with, effecting cost reduction and weight saving.

Specifically, the container box 23 in this embodiment is long in the longitudinal direction and load on the main seat 72 is received by the main seat side container 23a, therefore the main seat side container 23a is fastened to the first, second, and third support brackets 81, 82, 83 firmly with bolts. However, since the rear seat 73 is not supported on the container box 23, no large load is exerted to the rear section of the container box 23 and thus the bolt-fastening as in the main seat side container is unnecessary, ensuring support strength.

In addition, in such a large container box 23, mounting tolerance becomes great in the longitudinal direction, as is the deviation of the mounting position, but as a result of the rear section with a simple fitting structure, the deviation can be absorbed.

On the other hand, the main seat 72, as shown in Fig.16, comprises a main seat body 72b and a fixed seat bottom 72c.

The main seat body 72b, of approximately the same shape as the fixed seat bottom 72c (detailed description is omitted), has a bottom plate 72m (rigid core member) , over which is provided a cushion member which is covered with a surface material. The main seat body 72b is formed with a seat section 72d for driver's seat, and with a back rest 72a behind the seat section 72d.

The fixed seat bottom 72c has the central portion raised upwardly. It is provided at the peripheral portion with a water seal 72e, and formed with four elongated holes 72f in the longitudinal direction, into which are inserted bolts 72g which are fitted in weld nuts (not shown) on the bottom plate 72m of the main seat 72b. With these elongated holes 72f, the mounting position of the main seat body 72b in the longitudinal direction can be adjusted with respect to the fixed seat bottom. Further, the fixed seat bottom 72c is formed at the forward end with a hinge bracket 72h in one body, in the vertical wall of which is formed a through hole 72i into which is inserted the hinge pin 75.

As a result of the hinge pin 75 being inserted into support holes 23p of the main seat supports 23c formed on the forward end of the container box 23, the main seat 72 is mounted at the forward end pivotally to the container box 23.

On the other hand, as shown in Fig.2, a gas damper 89, which urges the main seat 72 in the direction of opening, is disposed in front of the main seat 72 longitudinally within a tunnel section 63c of the foot board 63. That is, as shown in Fig.2 and Fig.61, the vertical wall of the hinge bracket 72h of the fixed seat bottom 72c is provided a pivot shaft 72k, to which is connected the rear end 87a of the gas damper 87 for rotation, and as shown in Fig.5, its forward end 87b is connected for rotation to a bracket 88 fixed to the cross pipe 90 of the frame 1 through a shaft 89.

As a result of the gas damper 87 being disposed in front of the main seat 72, compared with a case in which the gas damper is disposed at the side of the container box 23, the lateral dimension of the container box 23 can be enlarged, as well as the sectional area of the opening 23d.

In addition, without any obliquely crossing gas damper 57, interference with the gas damper is avoided when articles are put in and taken out from the container box 23, providing good workability.

Further, the gas damper 87 is invisible even if the main seat 72 is opened, securing the quality of appearance.

Furthermore, the bracket 72h also acts as a means of connecting the gas damper 87, so that the number of parts can be reduced.

Moreover, the main seat body 72b with the integrated seat section 72d and back rest 72a, can be adjusted of its position in the longitudinal direction to suit the driver's physique, therefore compared with a case in which only the back rest section can be adjusted, a feeling of fitness of buttocks and hips to the seat will be improved, as well as pleasantness of the driver.

Also, only the main seat 72b can be moved longitudinally and the fixed seat bottom 72c for closing the opening 23d of the container box 23 is not allowed to move in the longitudinal direction, so that no displacement occurs with respect to the seal, securing sealing ability.

Further, the fixed seat bottom 72c can be made larger than the main seat body 72b, so that the size of the opening 23d of the container box 23 can be enlarged without being limited by the size of the main seat body 72b.

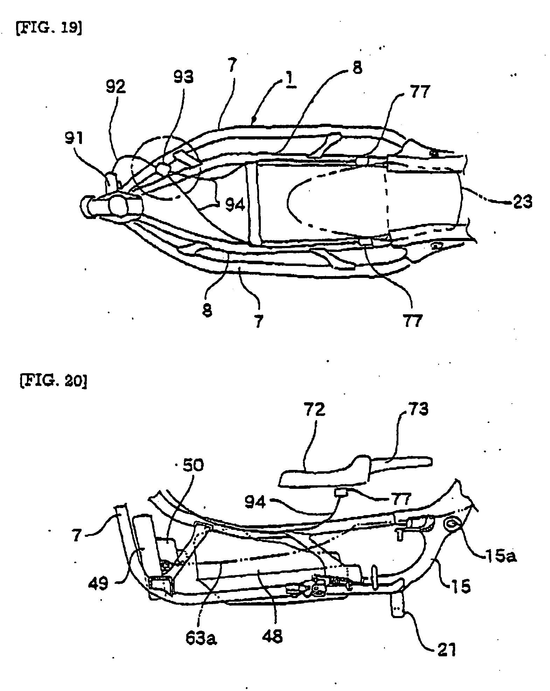

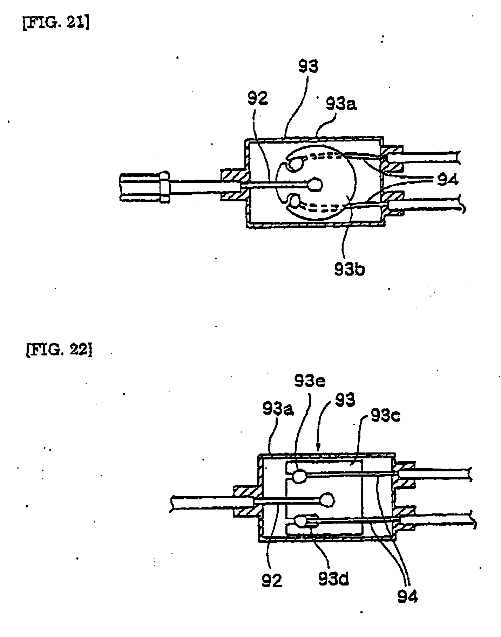

The pair of right and left locking devices 77 for locking the main seat72 are unlocked through operation of a main switch 90. That is, as shown in Fig.19, a seat locking main wire 92 is led from the main switch 90 toward the rear and coupled through a junction 93 to a pair of seat locking sub-wires 94 which are connected to the locking devices 77. The junction 93 is arranged as shown in Fig.21 such that within a case 93a, one end of the seat locking main wire 92 is coupled to a disk 93b, to which are coupled the pair of seat locking sub-wires 94, and that when the seat locking main wire 92 is pulled, the disk 93b moves to the left side in Fig.21 to pull the seat locking sub-wires 94 with the result that the pair of locking devices 77 are unlocked to open the main seat 72.

In this way, operation of the main switch 91 allows the plurality of locking devices 77 to be unlocked, so that the main seat 72 can be opened and closed without necessity of stopping the unit swinging engine 2.

Further, the pair of seat locking sub-wires 94 are extended from the locking devices 77 forwardly to be coupled to the junction 93 ahead of the main seat 72, so that the radius of curvature of the seat locking sub-wires can be greater, which decreases sliding resistance, thereby effecting a smaller key operating force of the main switch 91.

An arrangement of a differential phase type is shown as a variation of the junction 93 in Fig.22, in which one end of the seat locking main wire 92 is coupled to a square plate 93c and a pair of seat locking sub-wires 94 are coupled at their ends to the square plate 93c. One end of one of the pair of the seat locking sub-wires 94 is fitted in an elongated hole 93d of the square plate 93 for axial movement, and one end of the other of the sub-wires 94 is fitted in a circular hole 93e of the square plate 93c.

In this arrangement, when the seat locking main wire 92 is pulled to move the square plate 93c so as to pull the pair of seat locking sub-wires 94, one seat locking sub-wire 94 that is fitted in the elongated hole 93 will be pulled lagging behind the other seat locking sub-wire 94, so that the locking devices 99 can be unlocked one by one and thus key operating force can be dispersed, providing good operational quality.

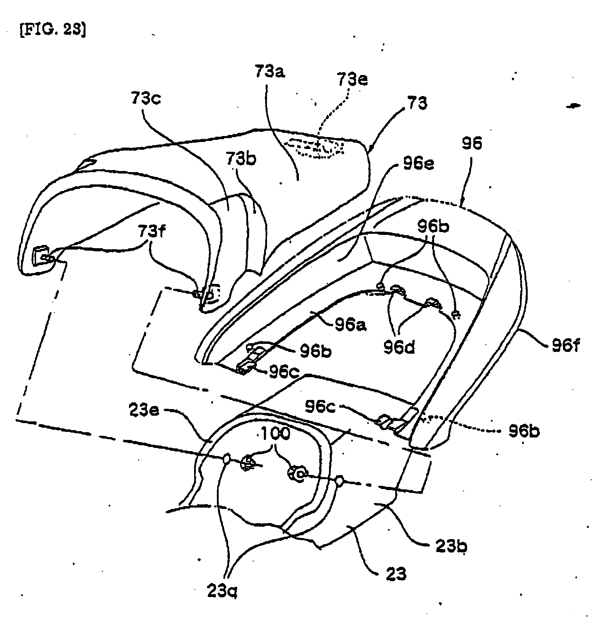

On the other hand, the rear seat 73, as shown in Fig.23, is of a fixed type; it has the shape of approximately an inverted letter U, formed in both sides with stepped portions 73b; and forward sections 73c extending forwardly from the stepped section are inserted into the back seat 72a of the main seat body 72. The length L2 of the forward section 73c from the stepped portion 73b to the forward end is formed larger than the sliding length of the main seat body 72b, and the main seat body 72b and the rear seat 73 are still overlapped even when the main seat body 72b is moved to the foremost limit.

Thus, when the main seat body 72b is slid for adjustment, no gap is generated between the main seat body and the rear seat 73, securing the quality of appearance.

Further, the rear seat 73 is provided with the stepped portions 73b which decrease the width of the forward section 73c, so that the main seat body 72b does not need to increase the width of its rear end, maintaining good seating quality.

The rear seat 73 is mounted on and fixed to the assist grip 96 which is fastened to the rear of the frame 1.

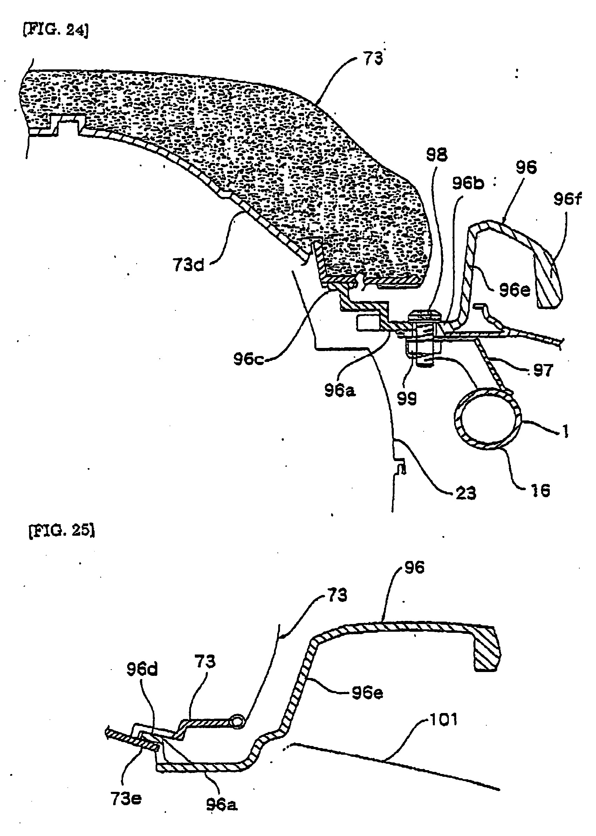

Specifically, as shown in Fig.24, to the seat pipes 16 of the frame 1 are attached support brackets 97 extending upwardly, on the tops of which is mounted the assist grip 96 with bolts 98 and nuts 99.

The assist grip 96, as shown in Fig.23, is bent in the shape of approximately an inverted letter U in plan view; on the upper side of the U-shaped horizontal flange section 96a are formed a total of four fastening section 96b which are fixed to the bracket with the bolts 98 and nuts 99; from the fastening sections 96b is extended inwardly seat supports 95c; and on the seat supports 96c are supported the seat bottom 73d of the rear seat 73. The rear seat 73 is formed with a hook section 73e on the bottom surface of the rear end of the seat bottom 73d, and the hook section 73e is inserted under the sections-to-be-engaged 96d of the assist grip 96 for engagement.

Further, On the inside surface of the forward end section 73c of the rear seat 73, as shown in Fig.23, are formed male screw sections 73f projecting inwardly, which are passed through through-holes 23q in the vertical wall of the container box 23 to be fastened by nuts 100.

Furthermore, the assist grip 96 is formed with a rising wall 96e rising from the outer edge of the horizontal flange section 96a, and from the top end of the rising wall 96e extends outwardly a gripping section 96f. A driver is able to raise his fallen vehicle by gripping the gripping section 96f from underside.

Thus, as a result of the rear seat 73 being supported on the assist grip 96, it is not necessary to dispose cross pipes for receiving load beneath the rear seat 73 as in the prior art, therefore the height of the rear seat 73 can be reduced. Rear seat mounting brackets etc can also be eliminated, effecting reduction in weight and size.

Further, if the rear seat is to be supported on the rear seat mounting brackets extending from the frame, this brackets needs to be protruded significantly further toward the vehicle center than the support brackets 97 shown in Fig.24 in order to avoid interference with the assist grip. In this case, when the container box 23 is removed, the rear seat 73 is first removed beforehand and at the same time, it must be ensured that the container box 23 does not interfere with the rear seat mounting brackets. Therefore, the width of the container box 23 can not be enlarged significantly. On the other hand, as a result of the rear seat 73 being fastened to the assist grip 96, such rear seat mounting brackets can be eliminated and interference with these brackets need not be taken into account, so that the width of the container box 23 can be enlarged.

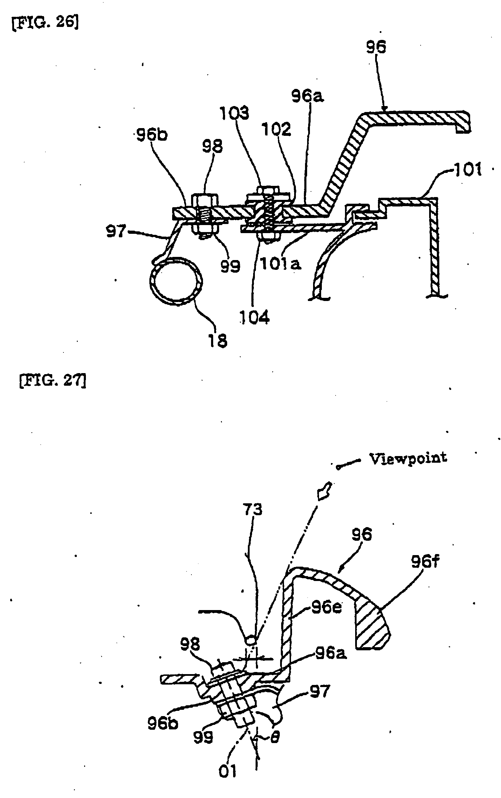

Furthermore, as shown in Fig.26, on the assist grip 96 is supported a tail light 101. The tail light 101 is formed with an attachment 101a projecting rearwardly, while in the flange section 96a on the rear end of the assist grip 96 is formed a attachment hole 96i, into which is fitted a rubber grommet 102; a bolt 103 is inserted in the grommet 102 and the attachment 96i, and a nut 104 is fitted over the bolt 103; whereby the tail light 101 is supported on the assist grip 96.

Thus, the tail light 101 is supported on the assist grip 96 in floating relation, so that breaking of bulbs due to vibration can be prevented. Further, the tail light 101 is located inside the assist grip 96, so that when the vehicle is pulled around in a parking place, the tail light 101 is protected by the assist grip 96, preventing bulb damage.

A rear flasher lamp may naturally be provided in place of the tail light 101.

As shown in Fig.27, the bolt 98 may be arranged such that the axis 01 is inclined at an angle to the vertical line, and that with the rear seat mounted, the bolt head is positioned further inward than the side edge of the rear seat. Thus, the head is invisible from the outside, maintaining good appearance. Also, the slanting bolt 98 allows its lower end to be located further outward from the vehicle center, effecting increased capacity of the container box 23.

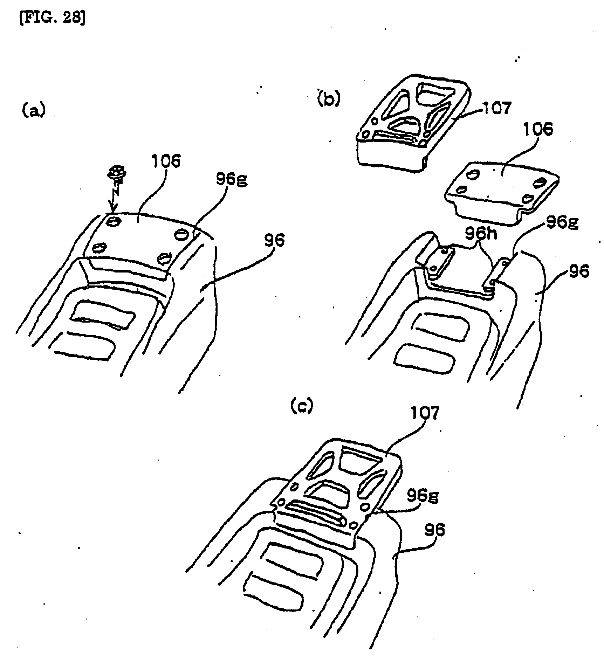

Also, as a variation of the assist grip 96 is shown in Fig.28 an arrangement, in which it is formed at the rear end with a cutout 96g, and the cutout 96g is formed with a pair of right and left support flanges 96h, to which is attached removably a lid 106 or a carrier 107.

The lid 106, which is supported on and attached to the flanges 96h, is disposed so as to cover the cutout 96g, with the top of the lid 106 flush with the top of the assist grip 96 (see Fig.28(a)).

When the rear carrier is used, the lid 106 is removed and the rear carrier 107 is fitted in the cutout 96g. The cutout 96g is arranged such that with the rear carrier fitted therein, the top surfaces of the rear carrier and the assist grip 96 are in flush relation (see Fig.28(c)).

In this way, even when the rear carrier 107 is mounted to the assist grip 96, integrity of the vehicle body can be maintained, providing good appearance as well as convenience in loading.

In place of the rear carrier 107, a tandem back rest, a high mount stop lamp or a rear box can be attached replaceably.

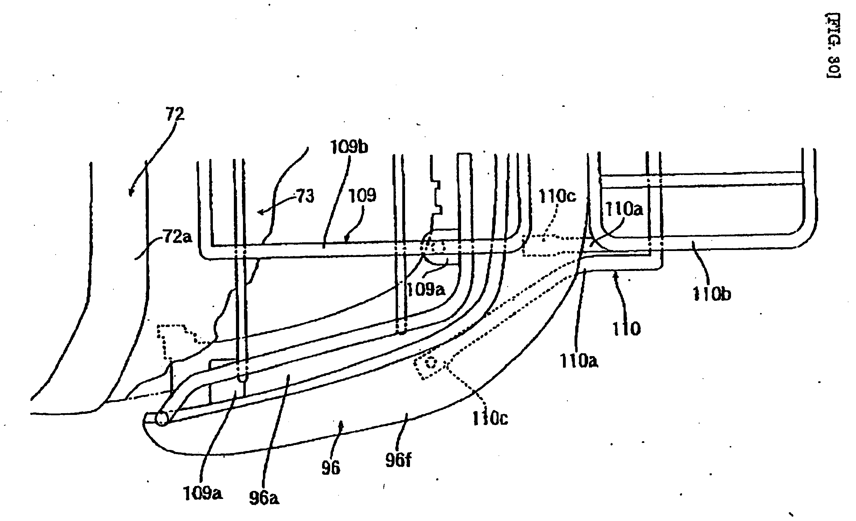

Further, as shown in Fig.23 and Fig.30, a rear seat carrier 109 is disposed over the rear seat 73, and to the rear of the rear seat carrier 109 is disposed a rear carrier 110. The rear seat carrier 109 is made of rod members, legs 109a of which are fastened to the flange section 96a of the assist grip 96 with bolts 111. The rear seat carrier 109 is formed with a loading surface 109b for baggage.

The rear carrier 110 is arranged such that it has a plurality of arms 110a extending forwardly, the foremost ends 110c of which are fastened to mounting sections 96j of the assist grip 96 with bolts, and that its loading surface 110b is flush with the loading surface 110a of the rear seat carrier 109.

In cases where the rear seat 73 is not used, if the rear seat carrier 109 is disposed over the rear seat 73 and baggage is loaded on the carrier 109, compared with the case of the rear carrier 110 carrying baggage, its safety load can be increased, as well as driving stability.

In addition, the loading surfaces 109b and 110b of the carriers 109 and 110 are disposed at the same height, large articles spanning the length of both loading surfaces 109a, 110b can be loaded.

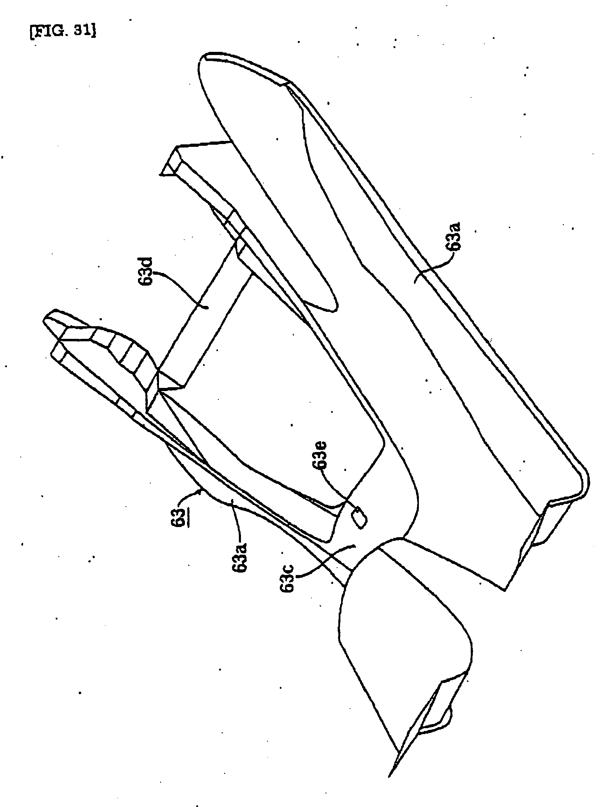

On the other hand, as shown in Fig.31, the foot board 63 has a pair of right and left foot rests 63a extending longitudinally of the vehicle, the front portions of which are connected by the tunnel section 63c and the rear portions of which are connected by a connector 63d.

Under the tunnel section 63c, as shown in Fig.2 etc, is disposed the fuel tank 46, and the tunnel section 63c is formed with an opening 63e which is provided with a fuel lid 113. Fuel can be refilled from the filling port 48f of the fuel tank by opening this fuel lid 113.

The connector 63d extends laterally passing under the narrowed section 23f of the container box 23.

Thus, the rear ends of the right and left foot rests 63a are connected by the connector 63d, so that the foot board 63 is increased in its rigidity as a whole, effecting improved assembling workability.

Further, the right and left foot rests 63a, the forward tunnel section 63c and the rear connector 63d have the shape of a loop, so that resin will flow smoothly in injection molding, improving moldability.

Furthermore, the container box 23 is provided with a narrowed section 23f as a recess to the engine 2 and container spaces are secured in front of and behind the narrowed section 23f, providing a larger container space. Also, the connector 63d of the foot board 63 makes use of the narrowed section 23f of the container box 23 for lateral connection, so that the connector 63d can be disposed without necessity of decreasing the capacity of the container box 23, providing a very effective arrangement.

### [Effect of the Invention]

As described above, according to the invention of claim 1, wind whistle level can be reduce by changing the flow state of air by providing an inlet at the lower portion of the screen to guide a running wind toward the driver's head side. As part of the running wind can flow smoothly through an inlet, the resistance of running can be reduced and thus the size of the screen can be increased by the reduction of the resistance of running, resulting in the improved effect of wind shield. It is achieved in practical use that, with a simple structure formed with the inlet at the lower portion of the screen the screen mounting structure cannot be limited. Further, air is efficiently introduced and the resistance of passage line can be also reduced by the use of a wind guide passage having short length.

## Claims

1. Vehicle having a front section structure comprising a windshield screen (33) disposed in a front portion of the vehicle; wherein an inlet (33b) for introducing a running wind into the back side of the windshield screen (33) and a wind guide plate portion (33c) for guiding the running wind introduced from the inlet (33b) upwardly toward a rear section of the vehicle are formed in a lower section (33a) of the windshield screen (33), **characterized in that** the wind guide plate portion (33c) forms a continuous plane with an upper surface (37a) of a meter visor (37), said upper surface (37a) of the meter visor (37) being arranged downstream of the wind guide plate portion (33c).

2. Vehicle according to claim 1, **characterized in that** the upper surface (37a) of the meter visor (37) is formed with a drain hole (37b) and with a ridge (37c) behind the drain hole (37b), wherein the ridge (37c) causes rainwater blown up along the wind guide plate portion (33c) to be blocked and to be discharged from the drain hole (37b).

3. Vehicle according to claim 1 or 2, **characterized in that** the meter visor (37) is formed, in its vertical wall, with an opening (37d), in which is fitted a speed meter (38).

4. Vehicle according to one of the claims 1 to 3, **characterized in that** the lower section (33a) of the windshield screen (33) is fixed to a stay (34) with bolts (35).

5. Vehicle according to one of the claims 1 to 4, **characterized in that** the inlet (33b) of the lower section (33a) of the windshield screen (33) is formed of an approximate width (H) of a helmet for introducing a running wind.

6. Vehicle according to one of the claims 1 to 4, **characterized in that** the wind guide plate portion (33c) is provided, at a rear end, with a variable angle visor (39) to vary direction of the running wind introduced from the inlet (33b).

## Patentansprüche

1. Fahrzeug mit einem Vorderabschnittsaufbau, aufweisend eine Windschutzscheibe (33), angeordnet in einem vorderen Abschnitt des Fahrzeuges; wobei ein Einlass (33b) zum Einleiten eines Fahrtwindes in die Rückseite der Windschutzscheibe (33) und ein Windführungsplattenabschnitt (33c) zum Führen des Fahrtwindes, eingeleitet von dem Einlass (33b), aufwärts in Richtung eines hinteren Abschnittes des Fahrzeuges, in einem unteren Abschnitt (33a) der Windschutzscheibe (33) gebildet sind, **dadurch gekennzeichnet, dass** der Windführungsplattenabschnitt (33c) eine fortlaufende Ebene mit einer Oberseite (37a) eines Messinstrumentvisiers (37) bildet, wobei die Oberseite (37a) des Messinstrumentvisiers (37) stromab des Windführungsplattenabschnittes (33c) angeordnet ist.

2. Fahrzeug nach Anspruch 1, **dadurch gekennzeichnet, dass** die Oberseite (37a) des Messinstrumentvisiers (37) mit einer Ablaufbohrung (37b) und mit einem Steg hinter der Ablaufbohrung (37b) gebildet ist, wobei der Steg (37c) veranlasst, Regenwasser, das entlang des Windführungsplattenabschnittes (33c) hochgeblasen wird, blockiert zu werden und aus der Ablaufbohrung (37b) abgegeben zu werden.

3. Fahrzeug nach Anspruch 1 oder 2, **dadurch gekennzeichnet, dass** das Messinstrumentvisier (37) in seiner vertikalen Wand mit einer Öffnung (37d) versehen ist, in der ein Tachometer (38) eingesetzt ist.

4. Fahrzeug nach einem der Ansprüche 1 bis 3, **dadurch gekennzeichnet, dass** der untere Abschnitt (33c) der Windschutzscheibe (33) an einer Strebe (34) mit Schrauben (35) befestigt ist.

5. Fahrzeug nach einem der Ansprüche 1 bis 4, **dadurch gekennzeichnet, dass** der Einlass (33b) des unteren Abschnittes (33a) der Windschutzscheibe (33) von einer ungefähren Breite (H) eines Helms zum Einleiten eines Fahrtwindes gebildet ist.

6. Fahrzeug nach einem der Ansprüche 1 bis 4, **dadurch gekennzeichnet, dass** der Windführungsplattenabschnitt (33c) an einem hinteren Ende mit einem veränderbaren Winkelvisier (39) versehen ist, um die Richtung des von dem Einlass (33b) eingeleiteten Fahrtwindes zu ändern.

## Revendications

1. Véhicule ayant une structure de section avant comprenant une vitre de pare-brise (33) disposée dans une partie avant du véhicule ; dans lequel une entrée (33b) pour introduire un vent circulant dans le côté arrière de la vitre de pare-brise (33) et une partie de plaque de guidage de vent (33c) pour guider le vent circulant introduit par l'entrée (33b) vers le haut vers une section arrière du véhicule sont formées dans une section inférieure (33a) de la vitre de pare-brise (33), **caractérisé en ce que** la partie de plaque de guidage de vent (33c) forme un plan continu avec une surface supérieure (37a) d'une visière de compteur (37), ladite surface supérieure (37a) de la visière de compteur (37) étant agencée en aval de la partie de plaque de guidage de vent (33c).

2. Véhicule selon la revendication 1, **caractérisé en ce que** la surface supérieure (37a) de la visière de compteur (37) est formée avec un trou d'évacuation (37b) et avec une partie saillante (37c) derrière le trou d'évacuation (37b), dans lequel la partie saillante (37c) amène l'eau de pluie qui s'est abattue le long de la partie de plaque de guidage de vent (33c) à être bloquée et à être évacuée par le trou d'évacuation (37b).

3. Véhicule selon la revendication 1 ou 2, **caractérisé en ce que** la visière de compteur (37) est formée, dans sa paroi verticale, avec une ouverture (37d) dans laquelle est monté un compteur de vitesse (38).

4. Véhicule selon l'une des revendications 1 à 3, **caractérisé en ce que** la section inférieure (33a) de la vitre de pare-brise (33) est fixée sur un socle (34) par des boulons (35).

5. Véhicule selon l'une des revendications 1 à 4, **caractérisé en ce que** l'entrée (33b) de la section inférieure (33a) de la vitre de pare-brise (33) est formée avec une largeur approximative (H) d'un casque pour introduire un vent circulant.

6. Véhicule selon l'une des revendications 1 à 4, **caractérisé en ce que** la partie de plaque de guidage de vent (33c) est munie, à une extrémité arrière, d'une visière à angle variable (39) pour modifier la direction du vent circulant introduit par l'entrée (33b).
